# FASCICULE DE BREVET EUROPEEN

(11) **EP 0 717 598 B1**
(45) Date de publication et mention de la délivrance du brevet: **29.12.1997**
(21) Numéro de dépôt: 94926270.3
(22) Date de dépôt: 05.09.1994
(51) Int. Cl.: A23F 5/04, A23F 5/08, A23F 5/44

(54) **PROCEDE DE TORREFACTION DU CAFE**
VERFAHREN ZUM RÖSTEN VON KAFFEE
COFFEE TORREFACTION PROCESS

(30) Priorité: 07.09.1993 FR 9310609
(43) Date de publication de la demande: 26.06.1996
(73) Titulaire: PERNOD-RICARD, F-75008 Paris (FR)
(72) Inventeur: CLAUZURE, André, F-77166 Grisy-Suisnes (FR)
(74) Mandataire: Warcoin, Jacques
(86) Numéro de dépôt international: FR9401037
(87) Numéro de publication internationale: WO9507026

(56) Documents cités:
- EP-A- 0 366 896
- FR-A- 2 245 293
- GB-A- 609 495
- GB-A- 1 048 817
- US-A- 2 712 501
- US-A- 3 088 825
- US-A- 3 801 716
- US-A- 4 540 591
- PATENT ABSTRACTS OF JAPAN vol. 15, no. 324 (C-0859) 19 Août 1991 & JP,A,03 123 441 (KKIKOMAN CO) 27 Mai 1991

## Description

La présente invention concerne un procédé de torréfaction du café permettant d'obtenir rapidement du café torréfié et permettant également d'obtenir aisément le produit torréfié sous forme de café moulu.

La torréfaction du café est une étape indispensable dans l'élaboration du café.

Il s'agit d'un traitement par la chaleur du café vert qui produit des modifications physiques et chimiques fondamentales dans la structure et la composition du café, entraînent un brunissement de celui-ci ainsi que l'apparition et le développement des caractéristiques organoleptiques du café dit "torréfié".

Cette torréfaction est également appliquée pour d'autres produits comme le cacao et la chicorée.

Les procédés de torréfaction actuels consistent à chauffer à sec le café vert jusqu'à ce qu'il présente les caractères de torréfaction recherchés. L'un des problèmes posés par ce type de procédé est que le chauffage, s'il permet de développer les qualités organoleptiques du café, peut entraîner également dans certains cas, compte tenu de la durée du processus, un départ de certains arômes.

En outre, une grande partie du café commercialisé actuellement l'est sous forme de café moulu, la mouture du café étant réalisée dans une opération séparée, après la torréfaction.

Ainsi, le brevet US-A-3,088,825 décrit un procédé de torréfaction de grains de café avec de la vapeur sous pression, suivi d'une détente rapide de la pression à la pression atmosphérique avec expulsion simultanée des grains de café du récipient de torréfaction dans une chambre d'expansion, procédé dans lequel la mouture du café n'est pas prévue.

Le brevet US-A-3,801,716 mentionne quant à lui la possibilité de granuler les grains de café par passage à travers une grille, mais ces grains sont d'abord comprimés sous haute pression.

Le procédé selon l'invention présente l'avantage de permettre une torréfaction rapide du café et l'obtention d'un café moulu pratiquement en une seule étape.

Plus particulièrement, la présente invention concerne un procédé de torréfaction du café, du cacao ou de la chicorée, caractérisé en ce que les grains verts, ou toutes parties de la plante, ayant subi toutes opérations préalables à la torréfaction (fermentation, ...) sont torréfiés en les soumettant à l'action de la vapeur d'eau à une pression supérieure ou égale à 5 bars, et en ce qu'on effectue une détente par mise à une pression inférieure à travers une grille, le café étant expulsé au travers de la grille et moulu instantanément.

Préférentiellement, la torréfaction est réalisée avec de la vapeur d'eau à une pression comprise entre 9 et 30 bars.

Par ailleurs, l'action de la vapeur d'eau est maintenue pendant un temps suffisant pour assurer une torréfaction satisfaisante, la durée de la torréfaction, dépendant évidemment de la pression et étant en général inférieure ou égale à 2 minutes, et de préférence inférieure ou égale à 1 minute.

Selon la présente invention, le procédé est de préférence mis en oeuvre dans un récipient étanche, dans lequel :
a) on introduit le produit vert,
b) on introduit la vapeur d'eau sous pression,
c) on laisse le produit en contact avec la vapeur d'eau sous pression pendant un temps déterminé,
d) on effectue une détente rapide pour ramener le récipient à la pression atmosphérique et ce au travers d'un orifice approprié tel qu'une grille,
e) ce qui permet de récupérer le café torréfié, et, lorsque la détente est effectuée par remise à la pression inférieure à travers une grille, on obtient un café moulu.

En effet, lors de la détente le café torréfié est expulsé sous pression au travers de la grille et donc moulu instantanément, pourvu que l'on utilise une grille calibrée en fonction de la mouture que l'on souhaite obtenir.

La vapeur d'eau utilisée peut être de la vapeur d'eau humide mais on peut également utiliser de la vapeur sèche.

L'exemple ci-après permettra de mettre en évidence d'autres caractéristiques et avantages de la présente invention.

### EXEMPLE 1

On utilise un récipient fermé résistant à la pression, muni d'un orifice de chargement obturé par un couvercle grâce auquel on peut introduire le café vert, le récipient étant en outre muni d'une arrivée de vapeur et, en partie basse, d'une vanne de mise à la pression atmosphérique, le conduit contrôlé par cette vanne présentant une grille.

On introduit une quantité d'environ 3 kg de café vert puis de la vapeur d'eau sous une pression de 30 bars. Le café vert est laissé en présence de la vapeur d'eau pendant une durée de 45 secondes et l'on rompt brutalement la pression en ouvrant la vanne inférieure.

Sous l'action de la dépression brutale, le café torréfié est expulsé au travers de la grille et on obtient un café qui présente les caractéristiques d'un café torréfié moulu.

Bien entendu, si l'on supprime la grille, on obtient un café torréfié non moulu.

Un échantillon de café vert torréfié de façon traditionnelle permet de constater une similitude des profils aromatiques et en particulier que les boissons obtenues ont des caractéristiques organoleptiques tout à fait similaires.

Les avantages de cette technologie sont que la durée de la torréfaction est très faible et que l'on peut facilement récupérer les arômes générés lors de la torréfaction.

Le chauffage étant d'une durée très limitée, il n'y a pas de sous-produit indésirable tel que le benzopyrène, il n'y a pas non plus le risque d'inflammation puisque le produit est maintenu sous vapeur d'eau.

L'inconvénient du procédé tel qu'il a été mis en oeuvre dans l'exemple est que le produit sortant du réacteur est humide, il peut donc être nécessaire de le sécher ou il doit être traité immédiatement ou conservé dans des conditions d'hygiène rigoureuses, il est également possible évidemment de procéder immédiatement à l'élaboration d'un extrait qui sera lyophilisé ou atomisé, si cela est nécessaire, et dans ce cas la teneur en eau ne constitue pas réellement un problème.

On peut également, comme cela a été mentionné précédemment, régler en partie ce problème en utilisant non pas de la vapeur d'eau humide mais de la vapeur sèche.

Dans une variante du procédé, on peut également créer la vapeur d'eau in situ en introduisant de l'eau dans un réacteur de type bombe calorifuge que l'on fait ensuite chauffer pour atteindre la pression désirée.

## Revendications

1. Procédé de torréfaction du café, du cacao ou de la chicorée, caractérisé en ce que les grains verts, ou toutes parties de la plante, ayant subi toutes opérations préalables à la torréfaction, sont torréfiés en les soumettant à l'action de vapeur d'eau à une pression supérieure ou égale à 5 bars et en ce qu'on effectue une détente par mise à une pression inférieure à travers une grille, le café étant expulsé au travers de la grille et moulu instantanément.

2. Procédé de torréfaction selon la revendication 1, caractérisé en ce que les grains sont soumis à l'action de la vapeur d'eau sous pression pendant une durée inférieure ou égale à 2 minutes.

3. Procédé de torréfaction selon l'une des revendications 1 ou 2, caractérisé en ce que les grains verts sont soumis à une pression comprise entre 9 et 30 bars.

4. Procédé selon l'une des revendications 1 à 3, caractérisé en -ce qu'on effectue les étapes suivantes :
a) on introduit le produit vert dans un récipient étanche,
b) on introduit la vapeur d'eau sous pression dans le récipient,
c) on laisse le produit en contact avec la vapeur d'eau sous pression,
d) on effectue la détente rapide pour ramener le récipient à la pression atmosphérique,
e) on récupère le produit torréfié.

5. Procédé selon la revendication 4, caractérisé en ce que l'étape b) est réalisée par chauffage du récipient contenant le produit vert et de l'eau.

6. Procédé selon l'une des revendications 4 ou 5, caractérisé en ce que l'étape c) a une durée inférieure ou égale à 1 minute.

7. Procédé selon l'une des revendications 1 à 6, caractérisé en ce que la vapeur d'eau est une vapeur sèche.

8. Procédé selon l'une des revendications 1 à 7, caractérisé en ce qu'après torréfaction le produit est séché.

## Claims

1. Process for roasting coffee, cocoa or chicory, characterized in that the green beans, or any parts of the plants, which have undergone any operations prior to the roasting, are roasted by subjecting them to the action of steam at a pressure greater than or equal to 5 bar, and in that an expansion is performed by placing the roasting vessel at a lower pressure through a grid, the coffee being expelled through the grid and instantly ground.

2. Roasting process according to Claim 1, characterized in that the beans are subjected to the action of pressurized steam for a period less than or equal to 2 minutes.

3. Roasting process according to one of Claims 1 or 2, characterized in that the green beans are subjected to a pressure of between 9 and 30 bar.

4. Process according to one of Claims 1 to 3, characterized in that the following stages are performed:
a) the green product is introduced into a sealed container,
b) the pressurized steam is introduced into the container,
c) the product is left in contact with the pressurized steam,
d) a rapid expansion is performed in order to bring the container to atmospheric pressure,
e) the roasted product is recovered.

5. Process according to Claim 4, characterized in that stage b) is carried out by heating the container containing the green product and the water.

6. Process according to one of Claims 4 or 5, characterized in that the duration of stage c) is less than or equal to 1 minute.

7. Process according to one of Claims 1 to 6, characterized in that the steam is dry steam.

8. Process according to one of Claims 1 to 7, characterized in that after roasting, the product is dried.

## Patentansprüche

1. Verfahren zum Rösten von Kaffee, Kakao oder Zichorie, dadurch gekennzeichnet, daß die grünen Körner oder alle Teile der Pflanze, die den Arbeitsgängen vor dem Rösten unterworfen worden sind, geröstet werden, indem man sie der Einwirkung von Wasserdampf bei einem Druck ≥ 5 bar aussetzt, und daß man eine Entspannung auf einen niedrigeren Druck durch einen Rost hindurch durchführt, wobei der Kaffee durch den Rost hindurch ausgestoßen und gleichzeitig gemahlen wird.

2. Röstverfahren nach Anspruch 1, dadurch gekennzeichnet, daß die Körner während einer Zeitdauer von ≤ 2 min der Einwirkung von Wasserdampf unter Druck ausgesetzt werden.

3. Röstverfahren nach einem der Ansprüche 1 oder 2, dadurch gekennzeichnet, daß die grünen Körner einem Druck zwischen 9 und 30 bar unterworfen werden.

4. Verfahren nach einem der Ansprüche 1 bis 3, dadurch gekennzeichnet, daß man die folgenden Stufen durchführt:
a) man führt das grüne Produkt in einen dicht verschlossenen Behälter ein
b) man leitet Wasserdampf unter Druck in den Behälter ein,
c) man läßt das Produkt mit dem Wasserdampf unter Druck in Kontakt kommen,
d) man führt eine schnelle Entspannung durch, um den Behälter wieder auf Atmosphärendruck zu bringen, und
e) man gewinnt das geröstete Produkt.

5. Verfahren nach Anspruch 4, dadurch gekennzeichnet, daß die Stufe (b) durchgeführt wird durch Erwärmen des Behälters, der das grüne Produkt und Wasser enthält.

6. Verfahren nach einem der Ansprüche 4 oder 5, dadurch gekennzeichnet, daß in der Stufe (c) die Zeitdauer ≤ 1 min beträgt.

7. Verfahren nach einem der Ansprüche 1 bis 6, dadurch gekennzeichnet, daß der Wasserdampf ein trockener Dampf ist.

8. Verfahren nach einem der Ansprüche 1 bis 7, dadurch gekennzeichnet, daß das Produkt nach dem Rösten getrocknet wird.
